# FASCICULE DE BREVET EUROPEEN

(11) **EP 1 771 648 B1**
(45) Date de publication et mention de la délivrance du brevet: **05.09.2007**
(21) Numéro de dépôt: 05775396.4
(22) Date de dépôt: 09.06.2005
(51) Int. Cl.: F02K 1/76

(54) **PROCEDE D'OUVERTURE D'UN CAPOT MOBILE EQUIPANT UN INVERSEUR DE POUSSEE**
VERFAHREN ZUM ÖFFNEN EINER MOBILEN HAUBE EINES SCHUBUMKEHRERS
METHOD FOR OPENING A MOBILE COWL EQUIPPING A THRUST REVERSER

(30) Priorité: 29.06.2004 FR 0407096
(43) Date de publication de la demande: 11.04.2007
(73) Titulaire: Aircelle, 76700 Harfleur (FR)
(72) Inventeur: DEHU, Michel, Philippe, F-31170 Tournefeuille (FR); METEZEAU, Fabrice, Henri, Emile, F-76290 Montivilliers (FR)
(74) Mandataire: Maureau, Philippe
(86) Numéro de dépôt international: PCT/FR2005/001422
(87) Numéro de publication internationale: WO 2006/010803

(56) Documents cités:
- EP-A- 0 843 089
- WO-A-02/088540

## Description

La présente invention se rapporte à un procédé d'ouverture d'un capot mobile actionné par un moteur électrique et équipant un inverseur de poussée pour turboréacteur.

Le rôle d'un inverseur de poussée lors de l'atterrissage d'un avion est d'améliorer la capacité de freinage d'un avion en redirigeant vers l'avant au moins une partie de la poussée générée par le turboréacteur. Dans cette phase, l'inverseur obstrue la tuyère d'éjection des gaz et dirige le flux d'éjection du moteur vers l'avant de la nacelle, générant de ce fait une contre-poussée qui vient s'ajouter au freinage des roues de l'avion.

Les moyens mis en oeuvre pour réaliser cette réorientation du flux varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots mobiles peuvent en outre remplir une fonction de déviation ou simplement d'activation d'autres moyens de déviation.

Dans les inverseurs à grilles, par exemple, les capots mobiles coulissent le long de rails de manière à ce qu'en reculant lors de la phase d'ouverture, ils découvrent des grilles d'aubes de déviation disposées dans l'épaisseur de la nacelle. Un système de bielles relie ce capot mobile à des portes de blocage qui se déploient à l'intérieur du canal d'éjection et bloquent la sortie en flux direct. Dans les inverseurs à portes, en revanche, chaque capot mobile pivote de manière à venir bloquer le flux et le dévier et est donc actif dans cette réorientation.

De manière générale, ces capots mobiles sont actionnés par des vérins hydrauliques ou pneumatiques qui nécessitent un réseau de transport d'un fluide sous pression. Ce fluide sous pression est classiquement obtenu soit par piquage d'air sur le turboréacteur dans le cas d'un système pneumatique, soit par prélèvement sur le circuit hydraulique de l'avion. Cependant, de tels systèmes requièrent une maintenance importante car la moindre fuite dans le réseau hydraulique ou pneumatique peut avoir des conséquences dommageables tant sur l'inverseur que sur d'autres parties de la nacelle. Par ailleurs, en raison de l'espace réduit disponible dans le cadre avant de l'inverseur, la mise en place et la protection d'un tel circuit sont particulièrement délicates et encombrantes.

Pour pallier les divers inconvénients liés aux systèmes pneumatiques et hydrauliques, les constructeurs d'inverseurs de poussée ont cherché à les remplacer et à équiper au maximum leurs inverseurs d'actionneurs électromécaniques, plus légers et plus fiables. Un tel inverseur est décrit dans les documents EP 0 843 089 et WO02/088540.

Il convient de noter que, pour assurer la fermeture de l'inverseur, le capot mobile est bloqué par des verrous. Ces verrous sont des pièces importantes pour la sécurité en vol et font partie des pièces les plus sensibles de l'inverseur de poussée. Ceux-ci sont donc tout particulièrement susceptibles d'être endommagés, voire de casser, en cas de choc trop fort du capot mobile. En effet, si au cours de la manoeuvre les verrous ne pouvaient s'ouvrir, en raison d'un blocage, le capot mobile en mouvement viendrait les heurter de plein fouet.

Afin de prévenir un tel accident, les verrous sont dimensionnés pour pouvoir résister aux chocs probables, augmentant de ce fait leur masse, ce qui n'est pas souhaitable en aéronautique.

La présente invention a pour but de remédier à cet inconvénient précédemment évoqué, et consiste pour cela en un procédé d'ouverture d'un capot mobile actionné par un moteur et équipant un inverseur de poussée pour turboréacteur, caractérisé en ce qu'il comprend, au début de la phase d'ouverture, une étape de bridage durant laquelle la vitesse du capot mobile est maintenue inférieure ou égale à une vitesse limite prédéterminée.

Ainsi, en limitant la vitesse d'ouverture du capot mobile en début de course, et plus précisément jusqu'à dépassement des pièces sensibles, la puissance d'un choc sera limitée à ce que peuvent supporter ces pièces sensibles sans qu'il soit nécessaire de les surdimensionner pour qu'elles puissent résister à un choc se produisant à vitesse élevée et puissance élevée.

Avantageusement, le moteur actionnant le capot mobile est un moteur électrique.

Selon une variante de réalisation de l'invention, la vitesse d'ouverture lors de l'étape de bridage est maintenue sensiblement égale à la vitesse limite prédéterminée.

Selon un premier mode d'implémentation du procédé objet de l'invention, la durée pendant laquelle l'étape de bridage est appliquée est prédéterminée.

Selon un deuxième mode d'implémentation du procédé de l'invention, la durée pendant laquelle l'étape de bridage est appliquée correspond à la durée que met le capot mobile pour atteindre une position prédéterminée. Cette position est définie de manière à correspondre à un dépassement des pièces sensibles telles que les verrous par les capots mobiles.

Avantageusement, le procédé selon l'invention comprend une étape d'analyse du régime de fonctionnement du turboréacteur conditionnant l'application de l'étape de bridage. Ainsi, il est possible de ne pas appliquer la séquence de bridage, qui nécessite plus de temps, en cas de situation d'urgence demandant une ouverture plus rapide ou une puissance moteur plus grande.

Avantageusement encore, le procédé selon l'invention comprend une boucle de contrôle de l'état de fonctionnement du moteur électrique apte à commander l'arrêt de celui-ci en cas de blocage.

De manière préférentielle, le moteur électrique est piloté par une consigne de couple.

La mise en oeuvre de l'invention sera mieux comprise à l'aide de la description détaillée qui est exposée ci-dessous en regard du dessin annexé dans lequel :
La figure 1 est une vue schématique partielle en perspective d'une nacelle intégrant un inverseur de poussée à grille.
La figure 2 est une représentation schématique des capots mobiles et de leur système d'actionnement.
La figure 3 est un diagramme représentant les étapes de fonctionnement d'un procédé selon l'invention.

Avant de décrire en détail un mode de réalisation de l'invention, il est important de préciser que le procédé décrit n'est pas limité à un type d'inverseur en particulier. Bien qu'illustrée par un inverseur à grilles comprenant des capots mobiles coulissant le long de rails, elle pourra être mise en oeuvre avec des inverseurs de conception différentes, notamment à portes. Par ailleurs, le principe de la limitation de vitesse au début de l'ouverture des capots mobiles peut être appliqué sur toute sorte de moteur d'actionnement des capots mobiles, un moteur électrique n'étant que plus facile à commander.

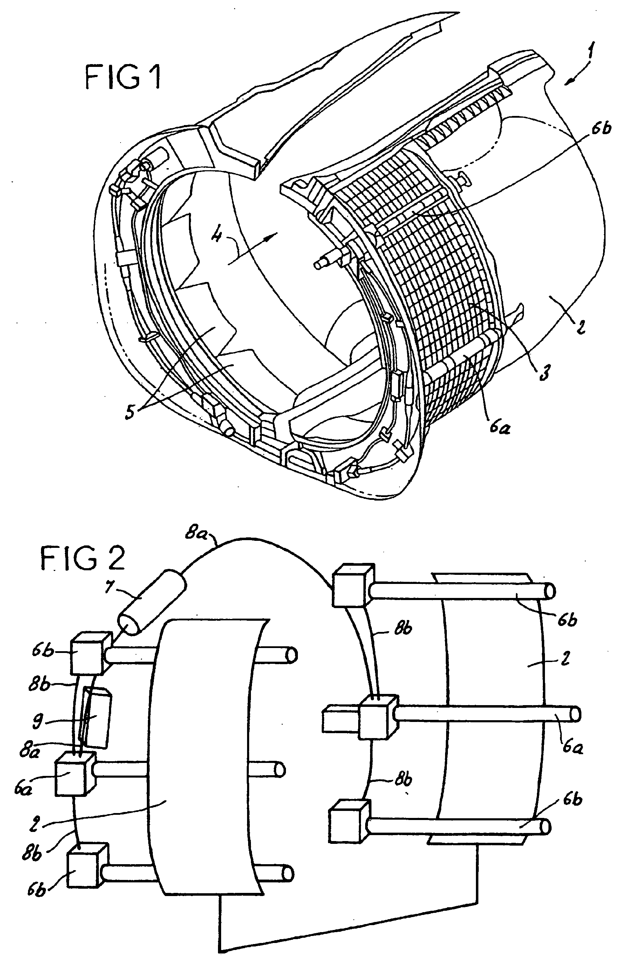

La figure 1 présente une vue schématique partielle d'une nacelle intégrant un inverseur de poussée 1. Le turboréacteur n'est pas représenté. Cet inverseur de poussée 1 possède une structure comprenant deux capots mobiles 2 semi-circulaires susceptibles de coulisser le long de rails (non visibles) pour découvrir des grilles 3 d'aubes de déviation placées entre les capots mobiles 2 et une section de passage du flux d'air 4 à dévier. Des portes de blocage 5 sont disposées à l'intérieur de la structure de manière à pouvoir pivoter et passer d'une position dans laquelle elles ne gênent pas le passage du flux d'air 4 à une position dans laquelle elles bloquent ce passage. Afin de coordonner l'ouverture des capots mobiles 2 avec une position obturante des portes de blocage 5, celles-ci sont mécaniquement reliées au capot mobile 2 par des charnières et à la structure fixe par un système de bielles (non représentées).

Le déplacement des capots mobiles 2 sur les rails le long de l'extérieur de la structure est assurée par un ensemble de vérins 6a, 6b montés sur un cadre avant à l'intérieur duquel sont logés un moteur électrique 7 et des arbres flexibles de transmission 8a, 8b respectivement connectés aux vérins 6a, 6b pour les actionner.

Le système d'actionnement des capots mobiles 2 est représenté seul à la figure 2. Chaque capot mobile 2 peut être translaté le long de ses rails sous l'action de trois vérins 6a, 6b, comprenant un vérin central 6a et deux vérins additionnels 6b, actionnés par un unique moteur électrique 7 relié à une interface de commande 9. La puissance délivrée par le moteur électrique 7 est tout d'abord distribuée aux vérins centraux 6a par l'intermédiaire de deux arbres de transmission flexibles 8a, puis aux vérins additionnels 6b par des arbres de transmission flexibles 8b.

Un moteur synchrone autopiloté est un moteur électrique 7 particulièrement bien adapté à un procédé selon l'invention car apte à recevoir une commande de couple ou de vitesse. Son fonctionnement repose sur l'interaction entre un champ magnétique rotorique et un champ magnétique statorique tournant. Dans un tel moteur électrique 7, un capteur détecte la position exacte du rotor et permet à un convertisseur de fréquence de maintenir un angle entre le rotor et le champ tournant statorique égal à 90° de façon à ce que le couple moteur soit toujours maximal. Une modulation de l'amplitude du champ tournant statorique fixe la valeur du couple moteur. Le capteur donne également une information sur la vitesse de rotation du moteur électrique 7.

Le contrôle du couple délivré et de la vitesse de rotation d'un tel moteur électrique 7 est simple. Pour que la vitesse reste constante en cas de diminution ou augmentation de charge, il faut diminuer ou augmenter le couple moteur. L'amplitude du champ tournant statorique sera donc réduite ou augmentée mais la fréquence du champ ne sera pas modifiée. Pour que le couple reste constant, il convient de diminuer la vitesse tout en maintenant l'amplitude du champ statorique. Un variateur réduit la fréquence du champ statorique, en conservant son amplitude.

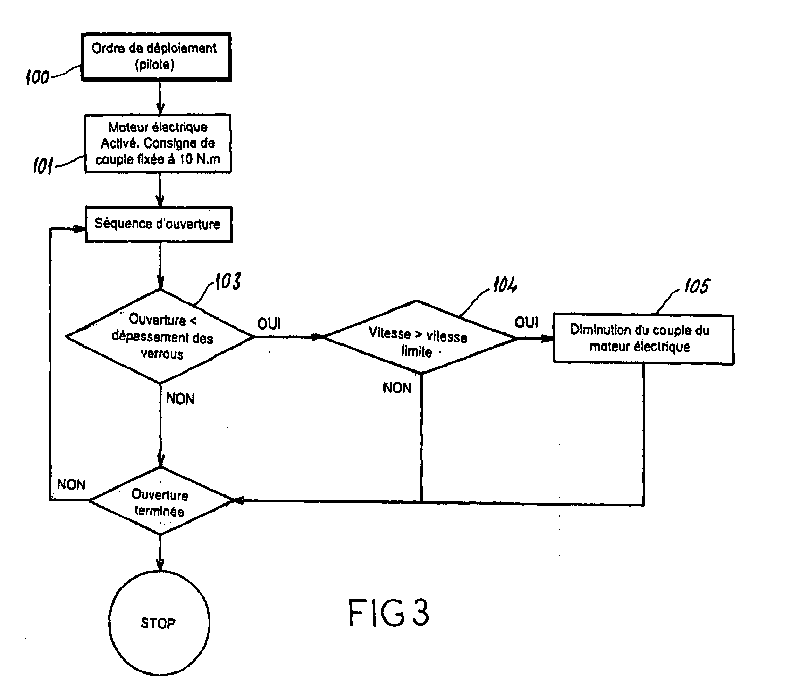

Un diagramme montrant les étapes d'un procédé selon l'invention pour l'ouverture en condition normale de l'inverseur de poussée 1 est représenté à la figure 3.

Initialement, l'ordre 100 est donné par le pilote de déployer l'inverseur. Le moteur électrique 7 est activé au cours d'une étape 101 qui lui fixe une consigne de couple égale à 10 N.m par exemple. Suit alors une séquence d'ouverture déterminée provoquant l'ouverture des capots mobiles 2.

La séquence comprend également deux sous-étapes de test 103, 104, formant une étape de bridage du moteur électrique 7, consistant à régulièrement analyser respectivement le déplacement du capot mobile 2 puis la vitesse de rotation du moteur électrique 7.

Si lors de l'étape de test 103, il apparaît que le capot mobile n'a pas dépassé la position des verrous, alors l'étape de test 104 est appliquée, sinon la séquence d'ouverture se poursuit normalement jusqu'à son terme, quand le capot mobile est totalement ouvert. L'analyse du déplacement des capots mobiles 2 permet donc de n'appliquer la limitation de vitesse qu'en début d'ouverture. En pratique, le déplacement des capots mobiles 2 est obtenu au moyen d'un résolveur terminant l'arbre de transmission flexible 8a et permettant de compter le nombre de tours effectué par ce dernier. D'autres moyens sont cependant tout à fait envisageables.

Suite à l'étape de test 103, l'étape de test 104 analyse donc la vitesse de rotation du moteur électrique 7, représentative de la vitesse d'ouverture du capot mobile 2. Si la vitesse de rotation du moteur électrique 7 est supérieure à la vitesse limite prédéterminée, alors un ordre 105 fixe une consigne de couple plus basse au moteur électrique 7. En diminuant le couple délivré par le moteur électrique 7 alors que les charges à vaincre restent constantes, sa vitesse diminue également.

Il est également possible de prévoir une sous-étape consistant à tester si la vitesse des rotation est inférieure à la vitesse limite préfixée de manière à obtenir une régulation de la vitesse maintenant cette dernière au plus près de la valeur limite, évitant de ce fait une limitation trop importante de la vitesse entraînant une perte de temps inutile.

Une fois cette étape de test 104 complétée et éventuellement une nouvelle consigne de couple fixée, le procédé reprend la séquence d'ouverture jusqu'à son terme.

## Revendications

1. Procédé d'ouverture d'un capot mobile (2) actionné par un moteur (7) et équipant un inverseur de poussée pour turboréacteur, **caractérisé en ce qu'**il comprend, au début de la phase d'ouverture, une étape de bridage (104) durant laquelle la vitesse du capot mobile est maintenue inférieure ou égale à une vitesse limite prédéterminée.

2. Procédé d'ouverture selon la revendication 1, **caractérisé en ce que** le moteur actionnant le capot mobile (2) est un moteur électrique (7).

3. Procédé d'ouverture selon l'une quelconque des revendications 1 ou 2, **caractérisé en ce que** la vitesse d'ouverture lors de l'étape de bridage (104) est maintenue sensiblement égale à la vitesse limite prédéterminée.

4. Procédé d'ouverture selon l'une quelconque des revendications 1 à 3, **caractérisé en ce que** la durée pendant laquelle l'étape de bridage (103) est appliquée est prédéterminée.

5. Procédé d'ouverture selon l'une quelconque des revendications 1 à 3, **caractérisé en ce que** la durée pendant laquelle l'étape de bridage (103) est appliquée correspond à la durée que met le capot mobile (2) pour atteindre une position prédéterminée.

6. Procédé selon l'une quelconque des revendications 1 à 5, **caractérisé en ce qu'**il comprend une étape d'analyse du régime de fonctionnement du turboréacteur conditionnant l'application de l'étape de bridage (103).

7. Procédé selon l'une quelconque des revendications 1 à 6, **caractérisé en ce qu'**il comprend une boucle de contrôle de l'état de fonctionnement du moteur (7) apte à commander l'arrêt de celui-ci en cas de blocage.

8. Procédé d'ouverture selon l'une quelconque des revendications 1 et 2, **caractérisé en ce que** le moteur (7) est piloté par une consigne de couple.

## Claims

1. Method for opening a mobile cover (2) which is activated by a motor (7), and equips a thrust inverter for a jet engine, **characterised in that**, at the beginning of the opening stage, it comprises a clamping step (104), during which the speed of the mobile cover is kept lower than, or equal to, a predetermined limit speed.

2. Opening method according to claim 1, **characterised in that** the motor which activates the mobile cover (2) is an electric motor (7).

3. Opening method according to either of claims 1 or 2, **characterised in that** the opening speed during the clamping step (104) is maintained substantially equal to the predetermined speed limit.

4. Opening method according to any one of claims 1 to 3, **characterised in that** the time during which the clamping step (103) is applied is predetermined.

5. Opening method according to any one of claims 1 to 3, **characterised in that** the time during which the clamping step (103) is applied corresponds to the time which the mobile cover (2) takes to reach a predetermined position.

6. Method according to any one of claims 1 to 5, **characterised in that** it comprises a step of analysis of the functioning condition of the jet engine, on which application of the clamping step (103) is dependent.

7. Method according to any one of claims 1 to 6 **characterised in that** it comprises a control loop for the functioning state of the motor (7), which can command stoppage of the latter in the event of blocking.

8. Opening method according to either of claims 1 and 2, **characterised in that** the engine (7) is piloted by a torque order.

## Patentansprüche

1. Verfahren zum Öffnen einer beweglichen Kappe (2), die von einem Motor (7) betätigt wird und mit der eine Schubumkehrvorrichtung eines TL-Triebwerks ausgestattet ist, **dadurch gekennzeichnet, dass** es am Anfang der Öffnungsphase einen Schritt des Flanschens (104) umfasst, während dessen die Geschwindigkeit der beweglichen Kappe kleiner oder gleich einer vorbestimmten Grenzgeschwindigkeit gehalten wird.

2. Öffnungsverfahren nach Anspruch 1, **dadurch gekennzeichnet, dass** der Motor, der die bewegliche Kappe (2) antreibt, ein Elektromotor (7) ist.

3. Öffnungsverfahren nach einem der Ansprüche 1 oder 2, **dadurch gekennzeichnet, dass** die öffnungsgeschwindigkeit während des Schrittes des Flanschens (104) im Wesentlichen gleich der vorbestimmten Grenzgeschwindigkeit gehalten wird.

4. Öffnungsverfahren nach einem der Ansprüche 1 bis 3, **dadurch gekennzeichnet, dass** die Dauer, während der der Schritt des-Flanschens (103) angewandt wird, vorbestimmt ist.

5. Öffnungsverfahren nach einem der Ansprüche 1 bis 3, **dadurch gekennzeichnet, dass** die Dauer, während der der Schritt des Flanschens (103) angewandt wird, der Dauer entspricht, die die bewegliche Kappe (2) benötigt, um eine vorbestimmte Position zu erreichen.

6. Verfahren nach einem der Ansprüche 1 bis 5, **dadurch gekennzeichnet, dass** es einen Schritt der Analyse des Funktionsmodus des TL-Triebwerks umfasst, die die Anwendung des Schrittes des Flanschens (103) bedingt.

7. Verfahren nach einem der Ansprüche 1 bis 6, **dadurch gekennzeichnet, dass** es eine Kontrollschleife des Funktionszustandes des Motors (7) umfasst, die das Anhalten desselben im Falle einer Blockierung steuern kann.

8. Öffnungsverfahren nach einem der Ansprüche 1 und 2, **dadurch gekennzeichnet, dass** der Motor (7) von einem Momentsollwert gesteuert wird.
